# EUROPÄISCHE PATENTSCHRIFT

(11) **EP 1 432 094 B1**
(45) Veröffentlichungstag und Bekanntmachung des Hinweises auf die Patenterteilung: **21.05.2008**
(21) Anmeldenummer: 02028671.2
(22) Anmeldetag: 20.12.2002
(51) Int. Cl.: H02G 11/00, B41J 29/00, H04N 1/04

(54) **Anordnung zum Stützen von flexiblen Bahnen, Bändern, Kabeln oder Leitungen sowie Vorrichtung mit einer derartigen Anordnung**
Structure for supporting flexible paths, bands, cables or lines as well as an apparatus with such a structure
Arrangement pour supporter des voies, bandes, câbles or lignes flexibles de même qu'un appareil avec un tel arrangement

(43) Veröffentlichungstag der Anmeldung: 23.06.2004
(73) Patentinhaber: Agfa-Gevaert HealthCare GmbH, 51373 Leverkusen (DE)
(72) Erfinder: Lux, Augustinus, 81371 München (DE); Hammer, Heribert, 81371 München (DE)

(56) Entgegenhaltungen:
- GB-A- 1 301 336
- US-A- 4 898 351
- PATENT ABSTRACTS OF JAPAN vol. 2000, no. 20, 10. Juli 2001 (2001-07-10) & JP 2001 076547 A (CANON INC), 23. März 2001 (2001-03-23)
- PATENT ABSTRACTS OF JAPAN vol. 014, no. 135 (M-0949), 14. März 1990 (1990-03-14) & JP 02 004564 A (CANON INC), 9. Januar 1990 (1990-01-09)

## Beschreibung

Die Erfindung betrifft eine Anordnung gemäß dem Oberbegriff des Anspruchs 1 zum Stützen von flexiblen Bahnen, Bändern, Kabeln und Leitungen. Ferner betrifft die Erfindung eine Vorrichtung nach dem Oberbegriff des Anspruchs 13 zum Auslesen von Informationen aus einem flachen Informationsträger, die mit einer derartigen Anordnung als Kabelführung ausgestattet ist.

Zur Übertragung von Informationen, Daten und Signalen oder zur Weiterleitung von Flüssigkeiten und Gasen zwischen zwei relativ zueinander beweglichen Einrichtungen oder Funktionseinheiten, beispielsweise einem beweglichen Lesekopf zum Auslesen von Informationen, welcher mit einer stationär angeordneten Steuerung zur Datenübertragung kommuniziert, werden flexible Leitungsbahnen, Bänder, Kabel oder auch flexible Rohrleitungen und Schläuche als Verbindungselemente eingesetzt. Das Verbindungselement ist üblicherweise flexibel ausgebildet und in Form eines Bogens zwischen den Funktionseinheiten geführt. Bei einer Relativbewegung zwischen den Funktionseinheiten wandert der zwischen den Funktionseinheiten angeordnete, bogenförmig verlaufende Abschnitt des diese miteinander verbindenden Verbindungselementes mit, so dass Relativbewegungen zwischen den Funktionseinheiten durch das Verbindungselement nicht behindert werden.

In vielen Fällen ist jedoch der Abstand zwischen den Funktionseinheiten, der von einem derartigen Verbindungselement zu überbrücken ist, so groß, dass das bogenförmig verlaufende, flexible Verbindungselement, beispielsweise ein Flachbandkabel, trotz seiner hohen Steifigkeit insbesondere im Bereich des Bogens zum Durchhängen neigt und die Relativbewegungen zwischen den Funktionseinheiten behindern kann.

Um dies zu vermeiden, wird häufig ein Stützkörper eingesetzt, der das Kabel oder die Leitung im Bereich des Bogens definiert abstützt. Der Stützkörper verläuft hierzu gleichfalls bogenförmig und ist in seiner Längsrichtung so beweglich gestaltet, dass er die Bewegungen des Kabels oder der Leitung zumindest im Bereich des Bogens nachvollzieht und das Kabel oder die Leitung im Bereich des Bogens abstützt oder hält. Als Stützkörper wird häufig eine Gliederkette eingesetzt, die mit ihren beiden Enden an den beiden Funktionseinheiten befestigt ist und das Kabel bzw. die Leitung abstützt.

Bei Verwendung derartiger Gliederketten besteht jedoch das Problem, dass beim hin und her Rollen der Gliederkette die einzelnen steifen Kettenglieder nicht sanft und gleichmäßig, sondern ruckartig auf- und abrollen. Die dabei entstehenden ruckartigen Bewegungen an der Gliederkette werden auf das Verbindungselement übertragen, das seinerseits die ruckartigen Bewegungen an die Funktionseinheiten weiterleitet. Gerade bei Geräten, die mit sehr hoher Präzision arbeiten, wie Vorrichtungen, mit denen Informationen von einem Informationsträger mit Hilfe eines beweglichen Lesekopfes ausgelesen werden, wird durch diese ruckartigen Bewegungen ein ordnungsgemäßes Auslesen beeinträchtigt, so dass Gliederketten als Stützkörper für Kabel und Leitungen, die den beweglichen Lesekopf mit einer stationären Steuereinheit verbinden, in derartigen Geräten nicht geeignet sind.

Aus US 4,898,351 ist eine Anordnung bekannt, bei der ein Flachkabel durch ein U-förmiges Doppelband, welches eine Querwölbung aufweist, gestützt wird. Aus GB 1 301 336 ist eine ähnliche Anordnung bekannt, bei welcher Kabel oder Schläuche im Inneren eines Doppelbandes geführt werden. JP 2001-076547 beschreibt die Möglichkeit, ein Flachkabel durch Auflaminieren von Formstücken quer zur Längsrichtung zu wölben und damit in sich selbst zu stabilisieren.
JP 02-004564 hat eine Kabelführung unter Verwendung eines U-förmigen Kabel-Dummys als Stützkörper zum Gegenstand.

Bei den aus dem Stand der Technik bekannten Anordnungen kann eine Auslenkung des jeweiligen Stützkörpers in der Ebene, in der dessen Schenkel liegen, nicht in allen Anwendungsfällen verhindert werden.

Es ist Aufgabe der Erfindung, eine Anordnung zum Stützen von flexiblen Bahnen, Bändern, Kabeln oder Leitungen bzw. eine Vorrichtung zum Auslesen von Informationen anzugeben, die bzw. bei der eine ruckfreie Führung von flexiblen Bahnen, Bändern, Kabeln und Leitungen auf einfache Weise ermöglicht bzw. möglich ist und eine Auslenkung der Stützkörpers in der Ebene, in der dessen Schenkel liegen, verhindert wird.

Die Erfindung löst die Aufgabe durch eine Anordnung mit den Merkmalen nach Anspruch 1. Ferner löst die Erfindung die Aufgabe durch eine Vorrichtung mit den Merkmalen nach Anspruch 13, die zum Auslesen von Informationen dient und bei der als Kabelführung eine erfindungsgemäße Anordnung eingesetzt ist.

Die Erfindung beruht im wesentlichen auf dem Gedanken, durch entsprechende Wahl bestimmter Materialeigenschaften und der Materialform einen Stützkörper zu schaffen, der einerseits trotz der Masse der auf dem Stützkörper aufliegenden oder an diesem gehaltenen Bahnen, Bänder, Kabel oder Leitungen seinen bogenförmigen Verlauf beibehält, während er gleichzeitig eine so ausreichend hohe Flexibilität besitzt, dass die Enden des Stützkörpers ruckfrei relativ zu einander zu bewegen sind. Zu diesem Zweck werden erfindungsgemäß zwei Flachbänder als Stützkörper eingesetzt, die quer zu ihrer Bewegungsrichtung eine gewölbte Querschnittsform besitzen. Durch die gewölbte Querschnittsform wird eine äußerst stabile Form der Flachbänder im Bereich des Bogens erreicht, wobei die Bogenform wiederum ausreichend hohe Stützkräfte für die abzustützenden Bahnen, Bänder, Kabel oder Leitungen erzeugt. Ferner wird durch die gewölbte Querschnittsform ein seitliches Ausweichen der Flachbänder quer zu deren Bewegungsrichtung verhindert, da sich die gewölbte Querschnittsform in sich selbst stabilisiert. Gleichzeitig bewirkt das in sich gleichförmige Material der Flachbänder ein sanftes und ruckfreies Verlagern des Bogens an den Flachbände, wenn die beiden Enden der Flachbänder relativ zueinander bewegt werden. Insgesamt ergibt sich durch den erfindungsgemäßen Einsatz der im Querschnitt gewölbten Flachbänder als Stützkörper auf einfache und sehr elegante Weise eine sichere und stabile Abstützung zu führender Bahnen, Bänder, Kabel oder Leitungen zwischen beweglichen Funktionseinheiten.

Des Weiteren ist bei der erfindungsgemäßen Anordnung vorgesehen, zwei U-förmige Flachbänder als Stützkörper zu verwenden, wobei beide U-Formen nebeneinander angeordnet und gleich ausgerichtet sind und alle Schenkel in der gleichen Ebene liegen. Hierdurch ergibt sich eine M-förmige Anordnung der Flachbänder, wobei sich die beiden Flachbänder gegenseitig abstützen und eine Auslenkung der Flachbänder in der Ebene, in der ihre Schenkel liegen, verhindert wird.

Vorteilhafte Weiterbildungen der Erfindung ergeben sich aus der nachfolgenden Beschreibung, den Figuren sowie den weiteren Ansprüchen.

So wird bei einer besonders bevorzugten Ausführungsform der erfindungsgemä-βen Anordnung mindestens eines der Flachbänder eingesetzt, das eine U-Form mit veränderbaren Schenkeln bildet und bei dem die Querwölbung an der Schenkelaußenseite konkav verläuft. Durch den konkaven Querschnittsverlauf des Flachbandes ergeben sich seitlich von der Flachbandaußenseite nach außen abstehende Ränder, welche zu einer seitlichen Stabilisierung des Flachbandes führen.

Alternativ ist es möglich, mindestens eines der Flachbänder zu verwenden, das eine U-Form mit veränderbaren Schenkeln bildet und bei dem die Querwölbung an der Schenkelaußenseite konvex verläuft. Hierdurch wird eine in sich besonders stabile Struktur des Flachbandes erreicht, da sich die durch den konvexen Verlauf der Querwölbung ergebenden, an der Flachbandinnenseite nach innen abstehenden Ränder das Flachband von seiner Innenseite her insbesondere im Bereich des Bogens abstützen.

Die abzustützenden Bahnen, Bänder, Kabel oder Leitungen sind vorzugsweise an der Schenkelaußenseite geführt. Dabei ist es von besonderem Vorteil, wenn in Längsrichtung der Bahnen, Bänder, Kabel oder Leitungen eine geringe Vorspannung derart aufgebracht wird, dass diese in jeder Stellung der Flachbänder an der Außenseite eines der Flachbänder gleichmäßig anliegen. Hat das jeweilige Flachband eine konkave Querschnittsform, wird ein Abrutschen der Bahnen, Bänder, Kabel oder Leitungen durch die nach oben abstehenden seitlichen Ränder, die sich durch die Querwölbung am Flachband ergeben, wirksam verhindern.

Alternativ oder ergänzend hierzu können die Bänder, Bahnen, Kabel oder Leitungen auch an der Innenseite eines der Flachbänder geführt sein, wobei in diesem Fall entsprechende Halteelemente die Kabel oder Leitungen am Flachband halten.

Die Flachbänder sind vorzugsweise aus einem Metallmaterial gefertigt, da Metallmaterialien bei bereits verhältnismäßig geringen Materialstärken eine bereits so hohe Materialsteifigkeit besitzen, dass sie eine ausreichende Stützwirkung für die Bänder, Bahnen, Kabel und Leitungen bieten. Ferner kann das Metallmaterial auf sehr einfache Weise in die gewünschte Bogenform gebracht werden. Besonders bevorzugt hat sich dabei die Verwendung von Federstahl als Metallmaterial herausgestellt, da der Federstahl aufgrund seiner elastischen Eigenschaften eine gleichmäßige Bogenform einnimmt und nicht zu knicken ist.

Alternativ können die Flachbänder auch aus einem Kunststoffmaterial gefertigt sein, wodurch sich der Vorteil ergibt, dass die Flachbänder auf einfache Weise in unterschiedlichste Querschnittsformen kostengünstig umgeformt werden kann.

Bei einer besonders bevorzugten Ausführungsform weist mindestens eines der Flachbänder an seinen Enden Befestigungsflansche auf, mit denen das Flachband schnell und sicher ohne großen Aufwand an entsprechenden Gegenflanschen zu befestigen ist, wodurch die Montage des Flachbandes als Stützkörper vereinfacht ist.

Bei dieser Ausführungsform der erfindungsgemäßen Anordnung ist es ferner von Vorteil, wenn an jedem der beiden Enden mindestens eines der Flachbänder Anschlüsse für die Bahnen, Bänder, Kabel oder Leitungen vorgesehen sind und sich die von dem Flachband abgestützten Bänder, Bahnen, Kabel oder Leitungen lediglich zwischen den beiden Enden des Flachbandes erstrecken und an die Anschlüsse angeschlossen sind. Auf diese Weise bildet die gesamte Anordnung eine Funktionseinheit, die einfach und schnell einzusetzen oder zu demontieren ist, ohne dass hierzu aufwendige Anpassungsarbeiten erforderlich sind. Das Anschließen der vom Flachband abgestützten oder gehaltenen Bänder, Bahnen, Kabel oder Leitungen erfolgt schnell und sicher durch die am Flachband gehaltenen Anschlüsse.

Die Steifigkeit der Flachbänder ist so bemessen, dass die Flachbänder bei aufgelegter Bahn, Band, Kabel oder Leitung die U-Form jederzeit beibehalten.

Des Weiteren wird vorgeschlagen, die Flachbänder mit den Bahnen, Bändern, Kabeln oder Leitungen als eine Einheit auszubilden, die Flachbänder also an den Bahnen, Bändern, Kabeln oder Leitungen so zu gestalten, dass sie gemeinsam mit diesen Verbindungselementen einzusetzen und auszubauen sind.

Bei einer besonders bevorzugten Ausführungsform der erfindungsgemäßen Anordnung ist der eine Schenkel der U-Form ortsfest fixiert, während der andere Schenkel mit einer bewegbaren Einrichtung verbunden ist. Auf diese Weise bildet das jeweilige Flachband eine mitzuführende, flexible Abstützung für Bahnen, Bänder, Kabel oder Leitungen, welche mit ihrem einen Anschlußende an einer stationären Einrichtung verbunden sind, während das andere Anschlußende mit der beweglichen Einrichtung in Verbindung steht.

Ferner wird bei einer besonders bevorzugten Ausführungsform der erfindungsgemäßen Anordnung vorgeschlagen, vier Flachbänder zu verwenden, wobei die vier U-Formen sternförmig angeordnet sind und die der Mitte zugewandten Schenkel einen Kanal zur Führung der flexiblen Bahnen, Bänder, Kabel oder Leitungen bilden. Durch diese Art der Anordnung der Flachbänder wird eine Abstützung gebildet, bei der sich die Flachbänder im dreidimensionalen Raum gegenseitig abstützen, jedoch eine Verlagerung der der Mitte zugewandten Schenkel der Flachbänder in Längsrichtung des Kanals ermöglicht.

Gemäß einem weiteren Aspekt betrifft die Erfindung eine Vorrichtung zum Auslesen von Informationen aus einem flachen Informationsträger. Die Vorrichtung ist hierzu mit einem parallel zur Flachseite des Informationsträgers über diesen zum Auslesen bewegbaren Lesekopf, einer mit dem Lesekopf zur Datenübertragung durch Kabel verbundenen Steuereinheit sowie einer Kabelführung zur Stabilisierung zumindest eines der Kabel ausgestattet. Die Kabelführung weist zwei in Bewegungsrichtung des Lesekopfes gebogen verlaufende Flachbänder auf, an denen das Kabel aufliegt, wobei die Flachbänder mindestens eine quer zur Bewegungsrichtung verlaufende Querwölbung haben. Durch die Verwendung der erfindungsgemäß ausgebildeten Flachbänder als Kabelführung wird erreicht, dass der Lesekopf beim Auslesen ruckfrei über den Informationsträger hinweg geführt werden kann und eine Auslenkung der Flachbänder in der Ebene, in der ihre Schenkel liegen, verhindert wird.

Als Informationsträger wird bevorzugt eine Speicherschicht eingesetzt, die vorzugsweise in Form einer Phosphorplatte ausgebildet ist.

Des Weiteren ist es von Vorteil, wenn die Vorrichtung gleichzeitig als Löscheinrichtung für den Informationsträger arbeitet. Hierzu wird vorgeschlagen, eine Löschlampe zum Löschen von auf dem Informationsträger enthaltenen Informationen vorgesehen ist, wobei die Löschlampe mit dem Lesekopf an einem gemeinsamen verfahrbaren Träger befestigt ist und die Kabel der Löschlampe gleichfalls von dem Flachband gestützt werden.

Weitere Merkmale und Vorteile der Erfindung ergeben sich aus der folgenden Beschreibung zweier Anwendungsbeispiele und drei bevorzugter Ausführungsformen, wobei Bezug auf die beigefügten Zeichnungen genommen wird.

Es zeigen:
- Fig. 1: eine perspektivische, schematische Darstellung einer Vorrichtung zum Auslesen von Informationen aus einer Phosphorplatte als Informationsträger, wie aus dem Stand der Technik bekannt.
- Fig. 2: eine vergrößerte Seitenansicht der in der Vorrichtung nach Fig. 1 verwendeten Kabelführung,
- Fig. 3: eine vergrößerte Schnittansicht eines ersten Ausführungsbeispieles eines Flachbandes der Kabelführung entlang des Schnittes A-A in Fig. 2,
- Fig. 4: eine vergrößerte Schnittansicht eines zweiten Ausführungsbeispieles eines Flachbandes, welches anstelle des in Fig. 3 gezeigten Flachbandes bei der Kabelführung in Fig. 2 verwendbar ist,
- Fig. 5: eine vergrößerte Schnittansicht eines dritten Ausführungsbeispieles eines Flachbandes welches anstelle der in den Fig. 3 und 4 gezeigten Flachbänder bei der Kabelführung in Fig. 2 verwendbar ist, und
- Fig. 6: eine schematische Seitenansicht eines Anwendungsbeispieles der erfindungsgemäßen Anordnung, bei der zwei Flachbänder zum Abstützen eines Kabels verwendet werden.

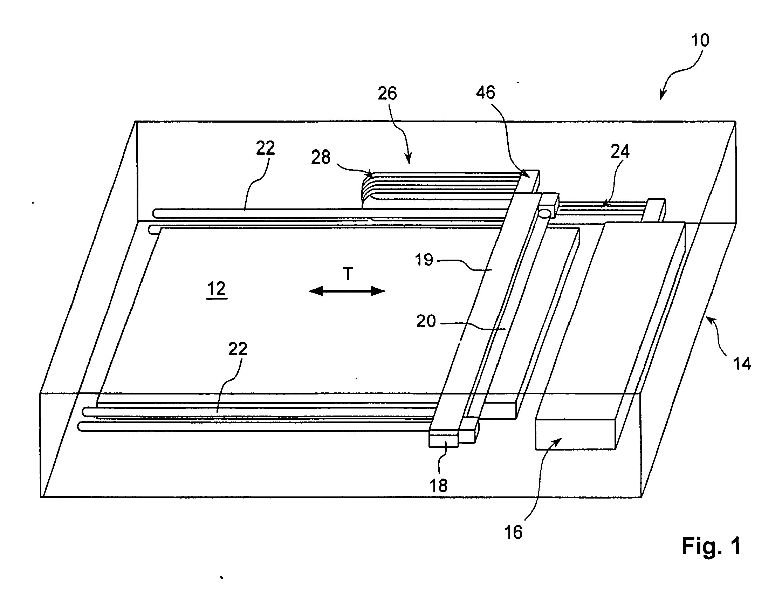

Fig. 1 zeigt in perspektivischer, schematischer Darstellung eine Vorrichtung 10 zum Auslesen von Informationen aus einer als Informationsträger dienenden Phosphorplatte 12, auf der die Informationen durch ein vorher erfolgtes Aufbelichten mittels Röntgenstrahlung gespeichert sind. Die Phosphorplatte 12 wird zum Auslesen auf einer Bühne (nicht dargestellt) in einem lichtdichten Gehäuse 14 der Vorrichtung 10 positioniert.

Im Gehäuse 14 ist eine Steuereinheit 16 sowie ein über die Flachseite der Phosphorplatte 12 zu führender Lesekopf 18 aufgenommen. Der Lesekopf 18 ist gemeinsam mit einer Löschlampe 20 an einem Träger 19 befestigt, welcher entlang zweier beidseitig der Bühne, auf der die Phosphorplatte 12 ruht, verlaufenden Führungen 22 in eine vorgegebene Transportrichtung T hin und her bewegbar ist.

An die Steuereinheit 16 ist ein erstes Flachbandkabel 24 eingesteckt, dessen anderes Ende an ein von einer Kabelführung 26 abgestütztes weiteres Flachkabel 28 angeschlossen ist, welches mit dem Lesekopf 18 und der Löschlampe 20 in Verbindung steht.

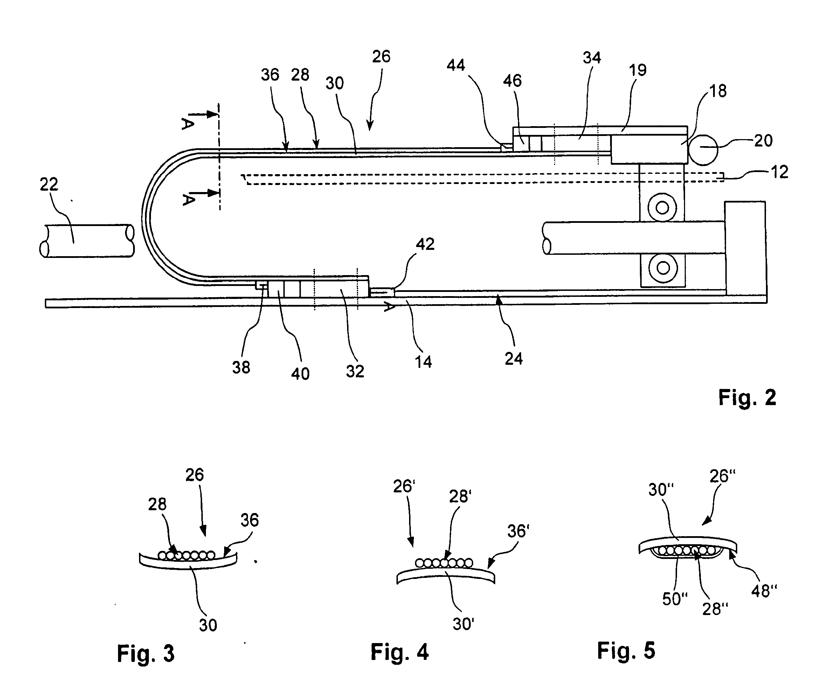

Die Kabelführung 26, deren Aufbau nachfolgend unter Bezugnahme auf die Fig. 2 näher erläutert wird, weist ein in Form eines U-förmigen Bogens verlaufendes Flachband 30 aus Federstahl auf, welches an seinen beiden Enden mit Befestigungsflanschen 32 und 34 versehen ist. Der untere Befestigungsflansch 32 ist am Boden des Gehäuses 14 befestigt, während der obere Befestigungsflansch 34 am Träger 19 des Lesekopfes 18 gesichert ist, wodurch das Flachband 30 die zuvor angesprochene U-Form einnimmt. Des Weiteren wird das Flachband 30 durch die Elastizität seines Federmaterials in einem definierten Spannungszustand gehalten, wodurch gleichzeitig auch das auf seiner Außenseite 36 aufliegende weitere Flachbandkabel 28 abgestützt und bei einer entsprechend am Flachbandkabel 28 wirkenden Vorspannung zusätzlich gespannt wird.

Das auf der Außenseite 36 des Flachbandes 30 aufliegende weitere Flachbandkabel 28 hat an seinem einen Ende einen Steckverbinder 38, mit dem das weitere Flachbandkabel 28 in eine am Gehäuse 14 gehaltene Anschlußbuchse 40 nahe dem unteren Befestigungsflansch 32 eingesteckt ist, in deren entgegengesetzte Anschlußstelle das erste Flachbandkabel 24 mit seinem Steckverbinder 42 eingesteckt ist. Das andere Ende des Weiteren Flachbandkabels 28 ist gleichfalls mit einem Steckverbinder 44 versehen, der in eine am Träger 19 befestigte obere Anschlußbuchse 46 nahe dem oberen Befestigungsflansch 34 eingesteckt ist.

Das Flachband 30, die Befestigungsflansche 32 und 34 sowie Flachbandkabel 28 mit den Steckverbindern 38 und 40 bilden eine Baueinheit, welche außerhalb des Gehäuses 14 vormontiert und in ihrer Gesamtheit in ihrer endgültigen Betriebsposition im Gehäuse 14 zu montieren ist.

In Fig. 3 ist eine Schnittansicht entlang der Schnittlinie A-A durch das Flachband 30 dargestellt. Wie Fig. 3 zeigt, hat das Flachband 30 eine - bezogen auf die Außenseite 36 des U-förmigen Flachbandes 30 - konkave Querschnittsform, so dass die in Längsrichtung des Flachbandes 30 verlaufenden Ränder leicht nach oben in Richtung der Außenseite 36 des Flachbandes 30 ansteigen. Durch diese Querwölbung des Flachbandes 30 werden im wesentlichen zwei Wirkungen erzielt. Einerseits wird das Flachband 30 in seiner U-Form stabilisiert, da die nach oben ansteigenden Ränder quer zur Längsrichtung versteifend wirken. Andererseits wird durch die Ränder verhindert, dass das auf der Außenseite 36 des Flachbandes 30 aufliegende Flachbandkabel 28 seitlich wegrutscht.

In Fig. 4 ist eine der in Fig. 3 gezeigten Schnittansicht entsprechende Schnittansicht durch ein Flachband 30' eines zweiten Ausführungsbeispiels einer Kabelführung 26' gezeigt. Bei diesem zweiten Ausführungsbeispiel hat das Flachband 30' eine konvexe Querwölbung, so dass die Ränder des Flachbandes 20' entgegengesetzt zur Außenseite 36' nach unten verlaufen. Durch diese konvexe Querwölbung wird eine besonders stabile U-Form des Flachbandes 30' erzielt, da das Flachband 30' durch die nach innen verlaufenden Ränder von seiner Innenseite her abgestützt ist. Das Flachbandkabel 28 liegt auch bei diesem zweiten Ausführungsbeispiel an der Außenseite 36' des Flachbandes 30' auf, wobei die Spannung des Flachbandes 30' und die Vorspannung des Flachbandkabels 28 in dessen Längsrichtung ausreichen, ein seitliches Abrutschen des Flachbandkabels 28 zu verhindern. Es ist jedoch möglich, zusätzliche Halteschlaufen vorzusehen, mit denen das Flachbandkabel 28 am Flachband 30' zusätzlich gesichert ist.

Fig. 5 zeigt eine Schnittansicht durch ein Flachband 30" eines drittes Ausführungsbeispiel einer Kabelführung 26", wobei die Schnittansicht im wesentlichen der in Fig. 4 gezeigten entspricht. Bei diesem dritten Ausführungsbeispiel ist das Flachband 30" wie das Flachband 30' des zweiten Ausführungsbeispiel im Querschnitt nach außen gewölbt und hat eine konvexe Außenseite 36". Das Flachbandkabel 28 ist bei diesem dritten Ausführungsbeispiel jedoch an der Innenseite 48" des Flachbandes 30" geführt, wobei das Flachbandkabel 28 durch zusätzliche Halteschlaufen 50" am Flachband 30" gesichert ist.

Wird nun der in Fig. 1 gezeigte Lesekopf 18 vom Träger 19 entlang der Führungen 22 in die Transportrichtung T hin und her bewegt, wird das Flachbandkabel 28 durch die Kabelführung 26 immer in einer U-Form gehalten, wobei der Bogen entsprechend der Bewegung des oberen Befestigungsflansches 34 in Transportrichtung T mitwandert. Dabei wird durch das Flachband 30 eine reibungs- und ruckfreie Bewegung des Lesekopfes 18 gewährleistet, während gleichzeitig das Flachbandkabel 28 jederzeit unter einer vorgegebenen Spannung verläuft und seine U-Form beibehält.

Im Allgemeinen ist die Querwölbung des Flachbandes 30 in den Bereichen au-βerhalb des U-förmigen Bogens am stärksten und im Bereich des Scheitels des Bogens aufgrund der dort auftretenden Biegekräfte am schwächsten ausgeprägt. Bei den vorzugsweise zu verwendenden quergewölbten Flachbändern kann die Querwölbung im Bereich des U-förmigen Bogens auch ganz verschwinden. Die erfindungsgemäße Verwendung von Flachbändern mit einer vorgeformten Querwölbung bezieht sich folglich auf jede Art von Flachbänder, welche im nichtgebogenen Zustand eine Querwölbung aufweisen

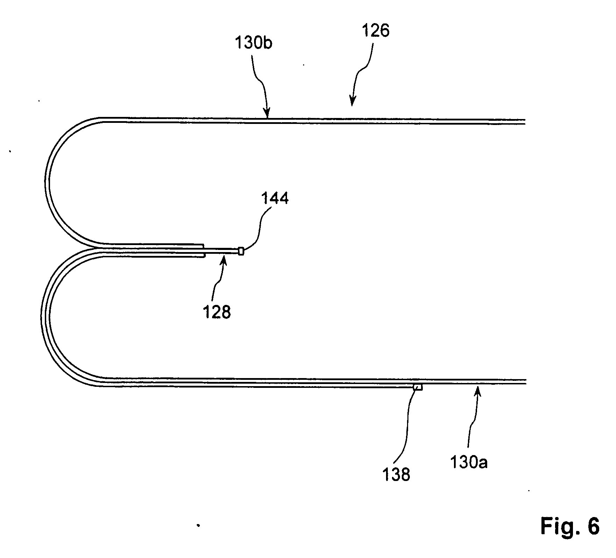

In Fig. 6 ist ein erfindungsgemäßes Anwendungsbeispiel in schematischer Darstellung gezeigt. Bei diesem Anwendungsbeispiel ist die Kabelführung 126 aus zwei Flachbändern 130a und 130b gebildet, die in ihren jeweiligen Querschnittsformen den in den Figuren 3 und 4 gezeigten Querschnittsformen des Flachbandes 30 entsprechen können. Die beiden Flachbänder 130a und 130b sind mit ihren U-Formen nebeneinander angeordnet, wobei die Schenkel der U-förmigen Flachbänder 130a und 130b mit ihren Enden in dieselbe Richtung zeigen und gleichzeitig in einer gemeinsamen Ebene, im vorliegenden Fall in der Papierebene oder in einer parallel zu dieser verlaufenden Ebene, angeordnet sind.

Das Flachbandkabel 128 liegt bei diesem zweiten Anwendungsbeispiel an der Außenseite des in Fig. 6 unten dargestellten Flachbandes 130a an und ist in den Spalt zwischen den beiden U-förmigen Abschnitten der beiden Flachbänder 130a und 130b eingeführt. Der Steckverbinder 138 am einen Ende des Flachbandkabels 128 ist nahe dem unteren Schenkel des unteren Flachbandes 130a an diesem gehalten, während der Steckverbinder 144 am anderen Ende des Flachbandkabels 128 nahe den beiden U-förmigen Abschnitten der Flachbänder 130a und 130b angeordnet ist.

Durch diese Art der Anordnung wird erreicht, dass das Flachbandkabel 128 vom ersten Flachband 130a abgestützt wird, während das zweite Flachband 130b zusätzlich das Flachband 130a hält. Diese Art der Anordnung ist insbesondere dann von Interesse, wenn das Flachbandkabel 128 an einer Funktionseinheit angeschlossen ist, welche sowohl in Längsrichtung der Flachbänder 130a und 130b als auch normal zu den Flachseiten der Flachbänder 130a und 130b verlagert werden kann, da die Flachbänder 130a und 130b das Flachbandkabel 128 in jede dieser beiden Bewegungsrichtungen der Funktionseinheit abstützen.

Dieses Anwendungsbeispiel stellt nur eine von vielen verschiedenen Möglichkeiten dar, die erfindungsgemäße Anordnung zum Abstützen von Bahnen, Bädern, Kabeln oder auch Leitungen einzusetzen. So kann die erfindungsgemäße Anordnung beispielsweise auch bei Vorrichtungen eingesetzt werden, bei denen Flüssigkeiten oder Gase durch ein Leitungssystem an eine bewegte Funktionseinheit, wie einen Druckkopf, einen Sprühkopf oder dergleichen, weitergeleitet werden, wobei die Leitungen des Leitungssystemes von einer erfindungsgemäß ausgebildeten Anordnung aus Flachbändern abgestützt werden.

Ferner ist es denkbar mehrere Flachbänder sternförmig anzuordnen, wobei die in der Mitte der sternförmigen Anordnungen positionierten Schenkel der Flachbänder einen Kanal für Leitungen, Kabel, Bänder oder Bahnen bilden. Durch die sternförmige Anordnung wird die in der Mitte der sternförmigen Anordnung positionierte Funktionseinheit in den Richtungen quer zu den Flachseiten der Flachbänder von den Flachbändern geführt und gehalten, während die Funktionseinheit in Längsrichtung der Flachbänder gesehen in axialer Richtung verstellbar bleibt.

## Patentansprüche

1. Anordnung zum Stützen von flexiblen Bahnen, Bändern, Kabeln oder Leitungen (28; 128) mit einem langgestreckten Stützkörper (130a, 130b), dessen beide Enden relativ zueinander bewegbar sind, wobei der Stützkörper (130a, 130b) zwischen seinen beiden Enden einen Bogen beschreibt, und als Stützkörper zwei Flachbänder (130a, 130b) mit einer vorgeformten Querwölbung verwendet werden, **dadurch gekennzeichnet, dass** die beiden Flachbänder (130a, 130b) jeweils eine U-Form aufweisen, wobei die U-Formen der beiden Flachbänder (130a, 130b) nebeneinander angeordnet und gleich ausgerichtet sind und alle Schenkel in der gleichen Ebene liegen, wodurch sich eine M-förmige Anordnung der Flachbänder (130a, 130b) ergibt.

2. Anordnung nach Anspruch 1, **dadurch gekennzeichnet, dass** mindestens eines der Flachbänder (130a, 130b) eine U-Form mit veränderbaren Schenkeln bildet, deren Querwölbung an der Schenkelaußenseite konkav verläuft.

3. Anordnung nach Anspruch 1, **dadurch gekennzeichnet, dass** mindestens eines der Flachbänder (130a, 130b) eine U-Form mit veränderbaren Schenkeln bildet, deren Querwölbung an der Schenkelaußenseite konvex verläuft.

4. Anordnung nach Anspruch 1 bis 3, **dadurch gekennzeichnet, dass** die flexiblen Bahnen, Bänder, Kabel oder Leitungen (28; 128) an der Außenseite der U-förmigen Schenkel eines der Flachbänder (130a, 130b) angeordnet sind.

5. Anordnung nach Anspruch 1 bis 3, **dadurch gekennzeichnet, dass** die flexiblen Bahnen, Bänder, Kabel oder Leitungen (28) an der Innenseite der U-förmigen Schenkel eines der Flachbänder (130a, 130b) angeordnet sind.

6. Anordnung nach einem der vorhergehenden Ansprüche, **dadurch gekennzeichnet, dass** die Flachbänder (130a, 130b) aus einem Metallmaterial, insbesondere aus Federstahl, gefertigt sind.

7. Anordnung nach einem der vorhergehenden Ansprüche, **dadurch gekennzeichnet, dass** die Flachbänder (130a, 130b) aus Kunststoff gefertigt sind.

8. Anordnung nach einem der vorhergehenden Ansprüche, **dadurch gekennzeichnet, dass** mindestens eines der Flachbänder (130a, 130b) an seinen Enden Befestigungsflanscheaufweist.

9. Anordnung nach einem der vorhergehenden Ansprüche, **dadurch gekennzeichnet, dass** an jedem der beiden Enden mindestens eines der Flachbänder (130a, 130b) Anschlüsse (138, 144) vorgesehen sind und sich ein von dem Flachband (130a) abgestütztes Kabel (128) bzw. eine von dem Flachband (130a) abgestützte Leitung lediglich zwischen den beiden Enden des Flachbandes (130a) erstreckt und an die Anschlüsse (138, 144) angeschlossen ist.

10. Anordnung nach einem der vorhergehenden Ansprüche, **dadurch gekennzeichnet, dass** die Steifigkeit der Flachbänder (130a, 130b)so bemessen ist, dass die Flachbänder (130a, 130b) bei aufgelegten Bahnen, Bändern, Kabeln oder Leitungen (28; 128) die U-Form beibehalten.

11. Anordnung nach einem der vorhergehenden Ansprüche, **dadurch gekennzeichnet, dass** die Flachbänder (130a, 130b) mit den Bahnen, Bändern, Kabeln oder Leitungen (28) eine Einheit bilden.

12. Anordnung nach einem der vorhergehenden Ansprüche, **dadurch gekennzeichnet, dass** ein Schenkel der U-Form ortsfest fixiert ist, während der andere Schenkel mit einer bewegbaren Einrichtung (19) verbunden ist.

13. Vorrichtung zum Auslesen von Informationen aus einem flachen Informationsträger mit einem parallel zur Flachseite des Informationsträgers (12) über diesen zum Auslesen bewegbaren Lesekopf (18), einer mit dem Lesekopf (18) zur Datenübertragung durch Kabel (24, 28, 128) verbundenen Steuereinheit (16) und einer Kabelführung (26) zur Stabilisierung zumindest eines der Kabel (28, 128), wobei die Kabelführung (26) zwei in Bewegungsrichtung (T) des Lesekopfes (18) gebogen verlaufende Flachbänder (130a, 130b) aufweist, an denen das Kabel (128) aufliegt, **gekennzeichnet durch** eine Anordnung zum Stützen des Kabels (128) nach einem der vorhergehenden Ansprüche.

14. Vorrichtung nach Anspruch 13, **dadurch gekennzeichnet, dass** der Informationsträger eine Speicherschicht (12), vorzugsweise in Form einer Phosphorplatte, ist.

15. Vorrichtung nach Anspruch 13 oder 14, **dadurch gekennzeichnet, dass** eine Löschlampe (20) zum Löschen von auf dem Informationsträger (12) enthaltenen Informationen vorgesehen ist, wobei die Löschlampe (20) mit dem Lesekopf (18) an einem gemeinsamen verfahrbaren Träger (19) befestigt ist und die Kabel der Löschlampe (20) gleichfalls von den Flachbändern (130a, 130b) gestützt werden.

## Claims

1. An arrangement for supporting flexible tracks, strips, cables or pipes (28; 128) with an elongated support element (130a, 130b) the two ends of which are moveable relative to one another, the support element (130a, 130b) forming an arch between its two ends, and two flat strips (130a, 130b) with a pre-shaped lateral curve being used as support elements, **characterised in that** the two flat strips (130a, 130b) are respectively in a U-shape, the U-shapes of the two flat strips (130a, 130b) being disposed next to one another and being aligned in the same way, and all of the side pieces lying in the same plane, by means of which an M-shaped arrangement of the flat strips (130a, 130b) is produced.

2. The arrangement according to Claim 1, **characterised in that** at least one of the flat strips (130a, 130b) forms a U-shape with changeable side pieces the lateral curve of which extends concavely on the outer side of the side pieces.

3. The arrangement according to Claim 1, **characterised in that** at least one of the flat strips (130a, 130b) forms a U-shape with changeable side pieces the lateral curve of which extends convexly on the outer side of the side pieces.

4. The arrangement according to Claims 1 to 3, **characterised in that** the flexible tracks, strips, cables or pipes (28; 128) are arranged on the outer side of the U-shaped side pieces of one of the flat strips (130a, 130b).

5. The arrangement according to Claims 1 to 3, **characterised in that** the flexible tracks, strips, cables or pipes (28) are arranged on the inner side of the U-shaped side pieces of one of the flat strips (130a, 130b).

6. The arrangement according to any of the preceding claims, **characterised in that** the flat strips (130a, 130b) are made of a metal material, in particular of spring steel.

7. The arrangement according to any of the preceding claims, **characterised in that** the flat strips (130a, 130b) are made of plastic.

8. The arrangement according to any of the preceding claims, **characterised in that** at least one of the flat strips (130a, 130b) has attachment flanges on its ends.

9. The arrangement according to any of the preceding claims, **characterised in that** attachments (138, 144) are provided on each of the two ends of at least one of the flat strips (130a, 130b), and a cable (128) supported by the flat strip (130a) or a pipe supported by the flat strip (130a) only extends between the two ends of the flat strip (130a) and is attached to the attachments (138, 144).

10. The arrangement according to any of the preceding claims, **characterised in that** the rigidity of the flat strips (130a, 130b) is such that the flat strips (130a, 130b) keep the U-shape when tracks, strips, cables or pipes (28; 128) are applied.

11. The arrangement according to any of the preceding claims, **characterised in that** the flat strips (130a, 130b) with the tracks, strips, cables or pipes (28) form one unit.

12. The arrangement according to any of the preceding claims, **characterised in that** one side piece of the U-shape is fixed stationarily, while the other side piece is connected to a moveable device (19).

13. An apparatus for reading out information from a flat information carrier with a reading head (18) parallel to the flat side of the information carrier (12) and moveable over the latter for read-out, a control unit (16) connected to the reading head (18) for data transfer via cables (24, 28, 128), and a cable guide (26) for stabilising at least one of the cables (28, 128), the cable guide (26) having two flat strips (130a, 130b) extending arcuately in the direction of movement (T) of the reading head and on which the cable (128) lies, **characterised by** an arrangement for supporting the cable (128) according to any of the preceding claims.

14. The apparatus according to Claim 13, **characterised in that** the information carrier is a storage layer (12), preferably in the form of a phosphor plate.

15. The apparatus according to Claim 13 or 14, **characterised in that** a deleting lamp (20) is provided for deleting information contained on the information carrier (12), the deleting lamp (20) being attached with the reading head (18) to a common moveable carrier (19), and the cables of the deleting lamp (20) likewise being supported by the flat strips (130a, 130b).

## Revendications

1. Agencement conférant un appui à des pistes, des rubans, des câbles ou conduits flexibles (28 ; 128), comportant un corps longiligne d'appui (130a, 130b) dont les deux extrémités sont mobiles l'une par rapport à l'autre, ledit corps d'appui (130a, 130b) décrivant un arc entre ses deux extrémités, et deux bandes aplaties (130a, 130b) à bombement transversal préformé étant utilisées en tant que corps d'appui, **caractérisé par le fait que** les deux bandes aplaties (130a, 130b) présentent respectivement une configuration en U, sachant que les configurations en U des deux bandes aplaties (130a, 130b) sont placées en juxtaposition avec orientation identique, et que toutes les branches se trouvent dans le même plan, d'où résulte une disposition en M desdites bandes aplaties (130a, 130b).

2. Agencement selon la revendication 1, **caractérisé par le fait qu'**au moins l'une des bandes aplaties (130a, 130b) est de configuration en U à branches variables, dont le bombement transversal offre une étendue concave à la face extérieure desdites branches.

3. Agencement selon la revendication 1, **caractérisé par le fait qu'**au moins l'une des bandes aplaties (130a, 130b) est de configuration en U à branches variables, dont le bombement transversal offre une étendue convexe à la face extérieure desdites branches.

4. Agencement selon les revendications 1 à 3, **caractérisé par le fait que** les pistes, rubans, câbles ou conduits flexibles (28 ; 128) se trouvent à la face extérieure des branches en U de l'une des bandes aplaties (130a, 130b).

5. Agencement selon les revendications 1 à 3, **caractérisé par le fait que** les pistes, rubans, câbles ou conduits flexibles (28) se trouvent à la face intérieure des branches en U de l'une des bandes aplaties (130a, 130b).

6. Agencement selon l'une des revendications précédentes, **caractérisé par le fait que** les bandes aplaties (130a, 130b) sont fabriquées en un matériau métallique, notamment en de l'acier à ressorts.

7. Agencement selon l'une des revendications précédentes, **caractérisé par le fait que** les bandes aplaties (130a, 130b) sont fabriquées en matière plastique.

8. Agencement selon l'une des revendications précédentes, **caractérisé par le fait qu'**au moins l'une des bandes aplaties (130a, 130b) possède des brides de fixation à ses extrémités.

9. Agencement selon l'une des revendications précédentes, **caractérisé par le fait que** des raccords (138, 144) sont prévus à chacune des deux extrémités d'au moins l'une des bandes aplaties (130a, 130b) et un câble (128) en appui sur la bande aplatie (130a) ou, respectivement, un conducteur ou conduit en appui sur la bande aplatie (130a), s'étend uniquement entre les deux extrémités de ladite bande aplatie (130a) et est rattaché auxdits raccords (138, 144).

10. Agencement selon l'une des revendications précédentes, **caractérisé par le fait que** la rigidité des bandes aplaties (130a, 130b) est calculée de façon telle que lesdites bandes aplaties (130a, 130b) conservent la configuration en U à l'état installé des pistes, rubans, câbles ou conduits (28 ; 128).

11. Agencement selon l'une des revendications précédentes, **caractérisé par le fait que** les bandes aplaties (130a, 130b) forment un ensemble unitaire avec les pistes, les rubans, les câbles ou les conduits (28).

12. Agencement selon l'une des revendications précédentes, **caractérisé par le fait qu'**une branche de la configuration en U est verrouillée à demeure, tandis que l'autre branche est reliée à un système mobile (19).

13. Dispositif de lecture d'informations à partir d'un support d'informations aplati, comprenant une tête lectrice (18) mobile parallèlement au côté aplati dudit support d'informations (12), au-dessus de ce dernier, en vue de la lecture ; une unité de commande (16), raccordée à la tête lectrice (18), en vue de la transmission de données par l'intermédiaire de câbles (24, 28, 128) ; et un guide-câble (26) conçu pour stabiliser au moins l'un des câbles (28, 128), ledit guide-câble (26) présentant deux bandes aplaties (130a, 130b) à étendue curviligne dans la direction de mouvement (T) de ladite tête lectrice (18), et sur lesquelles ledit câble (128) repose, **caractérisé par** un agencement selon l'une des revendications précédentes, conférant un appui audit câble (128).

14. Dispositif selon la revendication 13, **caractérisé par le fait que** le support d'informations est une couche de mémorisation (12) revêtant, de préférence, la forme d'une platine phosphorée.

15. Dispositif selon la revendication 13 ou 14, **caractérisé par le fait qu'**un témoin d'effacement (20) est prévu pour l'effacement d'informations stockées sur le support d'informations (12), le témoin d'effacement (20) étant fixé, avec la tête lectrice (18), à un support commun déplaçable (19), et les câbles dudit témoin d'effacement (20) étant semblablement en appui sur les bandes aplaties (130a, 130b).
